# EUROPEAN PATENT APPLICATION

(11) **EP 4 442 488 A1**
(43) Date of publication of application: **09.10.2024**
(21) Application number: 22901695.1
(22) Date of filing: 28.11.2022
(51) Int. Cl.: B60L 53/16, B60L 53/35

(54) **DOCKING CONNECTOR ASSEMBLY FOR ELECTRIC VEHICLE CHARGER**

(30) Priority: 03.12.2021 KR 20210171984; 03.06.2022 KR 20220068341
(71) Applicant: Evar Inc., Gyeonggi-do 13449 (KR)
(72) Inventor: LEE, Hun, Suwon-si Gyeonggi-do 16509 (KR); SHIN, Dong Hyuk, Seongnam-si Gyeonggi-do 13599 (KR); KIM, Ki Jae, Seoul 05809 (KR); HEO, Yu Jin, Yongin-si Gyeonggi-do 16903 (KR)
(74) Representative: Frenkel, Matthias Alexander
(86) International application number: PCT/KR2022/018910
(87) International publication number: WO 2023/101337

(57) **Abstract**

Disclosed is a docking connector assembly according to various embodiments of the present invention, which is designed to solve the problem as described above. The docking connector assembly may comprise: a first connector which is provided in a charging cart; and a second connector which is provided to be couplable to the first connector, wherein the second connector is provided to be movable in one or more axial directions and rotatable about an arbitrary axis.

## Description

### [Technical Field]

The present invention relates to a docking connector assembly including a structure for electrical connection between devices, and more specifically, to a docking connector assembly for an electric vehicle charger to compensate for a slight positional error between devices.

### [Background Art]

Electric vehicles (EVs) are a future convergence technology that is receiving interest and investment from governments and companies around the world together with the global green growth policy. Therefore, the automobile industry is rapidly changing the market demand axis from conventional oil-based vehicles to the electric vehicles.

As the demand for the electric vehicles increases, not only technologies for building infrastructure (chargers, power supply networks, etc.) for smoothly using the electric vehicles, but also recently methods and technologies for charging multiple electric vehicles are being developed.

Generally, conventional electric vehicle charging systems are provided with an electric vehicle charger in some of spaces in which a vehicle may be parked, such as an underground parking lot, and are operated in such a manner that a person who wants to charge the vehicle parks at a place in which the electric vehicle charger is provided and charges the electric vehicle.

However, since parking spaces in which electric vehicle chargers may be installed are quite limited and costs of building infrastructures for installing the electric vehicle chargers are quite high, only the demand for chargers is explosively increasing due to the increase in the number of electric vehicles. To solve such problems, the demand for mobile chargers has recently been increasing.

Meanwhile, a separate connector may be provided to directly couple the mobile charger with the electric vehicle or couple the mobile charger with a stationary charger. The connector may serve as an electrical/physical bridge for transmitting power of a battery included in the mobile charger to the stationary charger and the electric vehicle. However, since the size and weight of the mobile charger are quite large and the amount of power supplied per hour through the connector is quite large, failure, fire, etc., may occur when the connector is not coupled properly. Connectors developed until now have a problem that it is difficult to commercialize the connectors due to a high rate of the occurrence of coupling failure when a slight positional error occurs between the mobile charger and the electric vehicle/stationary charger.

The present invention relates to a connector assembly developed to solve the above problems and provides a connector assembly capable of electrical/physical coupling without any problem even when some positional errors occur upon docking the connector.

### [Related Art Document]

### [Patent Document]

(Patent Document 1) Korean Utility Model Application Publication No. 20-2021-0000504

### [Technical Problem]

An object of the present invention is to provide a docking connector assembly for an electric vehicle charger capable of performing smooth electrical/physical coupling on a mobile charger and an electric vehicle/stationary charger/electric terminal and minimizing the risk of failure and fire by implementing electrical/physical coupling by correcting errors even when coupling targets are not correctly aligned upon coupling.

Objects of the present invention are not limited to the above-described objects, and other objects that are not mentioned will be able to be clearly understood by those skilled in the art from the following description.

### [Technical Solution]

A docking connector assembly for an electric vehicle charger according to one embodiment of the present invention for achieving the above-described objects includes a first connector provided in a first charger, and a second connector provided to be coupled to the first connector, wherein the second connector may be provided to move in one or more axial directions and rotate about an arbitrary axis.

In various embodiments, the first connector may include a power transmission device, a first moving part using power of the power transmission device, and a docking part provided to be connected to the first moving part and coupled to the second connector.

In various embodiments, the first moving part may include a first guide rail provided to extend in one direction, and a first moving body provided to be movable on the first guide rail by the power transmission device.

In various embodiments, the docking part may include a first docking terminal coupled to the second connector, and a docking guide configured to guide a coupling location so that the first docking terminal is coupled to one point of the second connector.

In various embodiments, the second connector may include a fixed part provided on one surface of a second charger or a fixed surface, a second moving part connected to the fixed part to be movable in a first direction, and a rotational part rotatably connected to the second moving part.

In various embodiments, the fixed part may include a plurality of supports provided with a predetermined interval formed therebetween, a stationary rail connecting the plurality of supports, and a height moving body that is movable in a longitudinal direction of the stationary rail.

In various embodiments, the second moving part may include a first fixed body connected to the fixed part, one or more second guide rails connected to the first fixed body and provided to extend in a direction perpendicular to the stationary rail, and a second moving body provided to move in a longitudinal direction of the second guide rail.

In various embodiments, the second moving part may further include first spring parts provided on the second guide rail, and the first spring parts may be provided on both side surfaces of the second moving body on the second guide rail.

In various embodiments, the rotational part may include a second fixed body connected to the second moving part, a rotational body provided to rotate with respect to the second fixed body, and a second spring part provided between the second fixed body and the rotational body.

In various embodiments, the second fixed body may include a docking guide seating part on which a docking guide is seated.

In various embodiments, the rotational body may include a guide hole provided to allow a docking guide to pass therethrough, and a second docking terminal provided to be connected to the first connector, and the guide hole may include a center hole having a constant diameter and a reverse-tapered hole whose diameter gradually increases.

In various embodiments, the guide hole may be provided as two or more guide holes, and the second docking terminal may be provided on a central portion between the two or more guide holes.

Other detailed matters of the present invention are included in the detailed description and drawings.

### [Advantageous Effects]

According to various embodiments of the present invention, even when a first connector and a second connector slightly depart from an arrangement reference location, the first connector and the second connector can be coupled without any error, and thus it is possible to reduce the risk of damage and fire.

Effects of the present invention are not limited to the above-described effects, and other effects that are not mentioned will be able to be clearly understood by those skilled in the art from the following description.

### [Description of Drawings]

Various embodiments are described below with reference to the accompanying drawings, in which similar reference numerals are used to collectively denote similar components. In the following embodiments, for the purpose of description, numerous specific details are suggested to provide the overall understanding of one or more aspects.
FIG.1 shows an exemplary view of a system schematically showing a docking connector assembly for an electric vehicle charger according to one embodiment of the present invention.
FIG. 2 is an exemplary view showing a coupling process of a first connector and a second connector that are included in a docking connector assembly for an electric vehicle charger according to one embodiment of the present invention.
FIG. 3 shows an exemplary view of the first connector according to one embodiment of the present invention from the side.
FIG. 4 shows an exemplary view of the second connector according to one embodiment of the present invention in various directions.
FIG. 5 shows an exemplary view of the second connector according to one embodiment of the present invention in one direction.
FIG. 6 shows an exemplary view for describing a coupling process of the first connector and the second connector according to one embodiment of the present invention.
FIG. 7 is an exemplary view exemplarily showing a first spring part and a second spring part that are provided on the second connector according to one embodiment of the present invention.
FIG. 8 is an exemplary view exemplarily showing that a location of the second connector according to one embodiment of the present invention may be adjusted in various directions.

### [Modes of the Invention]

Advantages and features of the present invention and methods for achieving them will become clear with reference to embodiments described below in detail in conjunction with the accompanying drawings. However, the present invention is not limited to the embodiments disclosed below but may be implemented in various different forms, these embodiments are merely provided to make the disclosure of the present invention complete and fully inform those skilled in the art to which the present invention pertains of the scope of the present invention, and the present invention is only defined by the scope of the appended claims.

Terms used in the specification are for describing the embodiments and are not intended to limit the present invention. In the present specification, the singular form also includes the plural form unless specifically stated in the phrase. As used herein, "comprise" and/or "comprising" do not preclude the presence of addition of one or more other components other than the stated component. The same reference numerals denote the same components throughout the specification, and the term "and/or" includes each of the stated components and one or more combinations thereof. Although terms such as "first" and "second" are used to describe various components, it goes without saying that the components are not limited by these terms. The terms are only used to distinguish one component from another. Therefore, it goes without saying that a first component described below may be a second component within the technical spirit of the present invention.

Unless otherwise defined, all terms (including technical and scientific terms) used in the present specification may be used as meaning commonly understood by those skilled in the art to which the present invention pertains. In addition, terms defined in commonly used dictionaries are not construed ideally or excessively unless clearly and specially defined.

The term "unit" or "module" used in the specification indicates software or a hardware component such as a field programmable gate array (FPGA) or an application specific integrated circuit (ASIC), and the "unit" or "module" performs certain functions. However, the "unit" or "module" is not limited to software or hardware. The "unit" or "module" may be configured to be disposed in an addressable storage medium and configured to operate one or more processors. Therefore, as an example, the "unit" or "module" is components such as software components, object-oriented software components, class components, and task components, processes, functions, attributes, procedures, subroutines, segments of program code, drivers, firmware, microcode, circuits, data, database, data structures, tables, arrays, and variables. Functions provided in components and "units" or "modules" may be combined into the smaller number of components and "unit" or "modules" or separated into additional components and "units" or "modules."

The spatially relative terms "below," "beneath," "lower," "above," "upper," etc. may be used to easily describe the correlation between one component and other components as shown in the drawings. The spatially relative terms should be understood as including different directions of components in use or operation in addition to the directions shown in the drawings. For example, in case of turning the component shown in the drawing over, a component described as being disposed "below" or "beneath" another element may be disposed "above" another element. Therefore, the exemplary term "below" may include both downward and upward directions. Components may also be oriented in other directions, and thus the spatially relative terms may be construed according to the orientations.

Although terms such as "first" and "second" are used to describe various elements or components, the elements or components are not limited by these terms. These terms are only used to distinguish one element or component from another element or component. Therefore, it goes without saying that a first element or component mentioned below may be a second element or component within the technical spirit of the present invention.

Hereinafter, embodiments of the present invention will be described in detail with reference to the accompanying drawings.

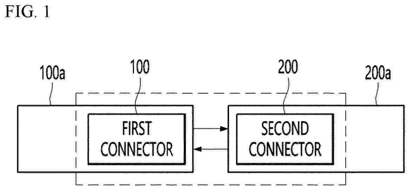

FIG.1 shows an exemplary view of a system schematically showing a docking connector assembly for an electric vehicle charger according to one embodiment of the present invention.

As shown in FIG. 1, a docking connector assembly 1000 of the present invention may include a first connector 100 and a second connector 200. According to an embodiment, the first connector 100 may be provided on a moving object, and the second connector 200 may be provided on the moving object or a fixed object. For example, the moving object may be a charging cart 100a, and the fixed object may be an electric vehicle or a separate charger. The charging cart 100a may include the first connector 100, and the electric vehicle may include the second connector 200. Detailed description of the device provided with each of the above-described first and second connectors is merely illustrative, and the present invention is not limited thereto.

According to one embodiment of the present invention, the charging cart 100a may include a charging module for charging an electric vehicle. According to the embodiment, an electric vehicle may indicate a vehicle moved by generating a driving force through a battery engine. An electric vehicle may indicate a vehicle that may travel without an internal combustion engine by driving an electric motor using only electric energy supplied from a charged battery cell as a power source. Electric vehicles may be eco-friendly vehicles that do not use fossil fuels and thus do not emit carbon dioxide or nitrogen oxides when traveling. The charging cart 100a includes a connector (i.e., the first connector) electrically connected to a charging port (e.g., a charging connector) of the electric vehicle and may supply power to the electric vehicle through the corresponding connector.

In an embodiment, the charging cart 100a may be movably provided to be shared and used by a plurality of users in a parking space. Since the charging cart 100a includes a traveling part, the charging cart 100a may move in the parking space in which a plurality of vehicles are parked. For example, users may charge the electric vehicles after parking the electric vehicles in a specific area in the parking space, moving the charging cart 100a to locations at which the electric vehicles are parked, and connecting the first connector of the charging cart 100a to the electric vehicles to supply power.

According to one embodiment, the charging cart 100a may be an electric cart that may be moved by electric assistance to reduce a force for movement, that is, the user's labor. In general, carts for charging electric vehicles may be configured in combination of a charging module (e.g., an energy storage device) and electronic elements therefor and thus provided to have a slightly high weight (e.g., about 700 kg). In this case, a high force may be required for the user to move the cart to the location at which the user's vehicle is parked. In particular, when there is an uphill road, a downhill road, a speed bump, etc., on a movement path of the charging cart 100a, the user's more force may be required to move the charging cart 100a, and thus it may be difficult to control the movement of the cart. When there is difficulty in controlling the movement of the charging cart 100a, it may cause an unsafety problem. For example, in a situation in which the user moves the charging cart 100a on the downhill road, when the user's body (e.g., a hand) holding the charging cart 100a is separated from the charging cart 100a and the charging cart 100a may not generate sensing information related to stop by immediately detecting the separation, a serious unsafety problem may be caused.

The charging cart 100a according to the present invention may assist the movement of the charging cart 100a by detecting the user's manipulation intention through various sensor modules. For example, when the user wants to move the charging cart 100a to charge his/her electric vehicle, the charging cart 100a may detect the user's manipulation intention (e.g., pushing or stopping the cart) for moving the charging cart 100a through various sensors provided in the corresponding charging cart 100a, and the movement of the charging cart 100a may be controlled by a small force after supplying power to the charging cart 100a in respond to the user's intention.

In an additional embodiment, the charging cart 100a may include an automated robot cart for identifying a location of a parked electric vehicle and approaches the identified location of the electric vehicle to perform charging. In this case, the user may transmit a signal for calling the charging cart 100a to a server (e.g., an automated robot management server or a parking lot management server) using a user terminal (e.g., a smartphone, a tablet, a PDA, or a laptop).

For example, a parking lot may be divided into a plurality of parking areas, and smart tags (e.g., Near Field Communication (NFC) tags) matching the plurality of parking areas may be provided (e.g., attached to pillars). The user may transmit the signal for calling the charging cart 100a to the server by selecting the NFC tag located in the parking area of the electric vehicle using the user terminal.

Meanwhile, in the server, a parking lot may be mapped based on a drawing of the building. The server may specify the parking area for the electric vehicle in the mapped parking lot according to the signal received from the user terminal and transmit a control command, which allows the charging cart 100a to move to the specified parking area, to the charging cart 100a. According to such a process, the charging cart 100a according to the present invention may move from a standby position to the parking area of the electric vehicle through autonomous driving. In addition, the charging cart 100a may identify the location of the charging connector of the electric vehicle, dock the first connector 100 to the identified charging connector, and then charge the electric vehicle. For example, the charging cart 100a according to the present invention may be provided with a near-field position sensor, and the near-field position sensor may detect the location of the charging connector (e.g., the second connector) near the electric vehicle. The charging cart according to the present invention may charge the electric vehicle through a process of transmitting electric energy of an electric energy storage device to the electric vehicle.

According to one embodiment of the present invention, the charging cart 100a may move to the charging station after completing the charging of the electric vehicle. For example, the charging cart 100a may move to the charging station based on a force (e.g., a force for manipulating the cart) applied from the user or through a traveling signal (e.g., a return signal) received from the server. Here, the charging station may indicate an area in which the electric energy of the electric energy storage device is charged in the charging cart 100a. As the charging cart 100a supplies the electric energy to the electric vehicle, the electric energy stored in the electric energy storage device of the charging cart 100a may be consumed, and the consumed electric energy may be recharged through a charger provided at the charging station. That is, the charging station may indicate an area in which the charging cart 100a moving to the location at which the electric vehicle is parked to perform charging is charged.

According to one embodiment of the present invention, the second connector 200 may be provided in a charger 200a. The charger 200a according to the present invention may include a battery charger related to an electric vehicle or a charger provided in the charging station for charging the charging cart 100a. According to the embodiment, the second connector 200 may include a charging connector related to an electric vehicle or a charging connector related to a charger provided in a charging station. The charging station has a concept including both stationary and moving types.

That is, docking (or connection) between the first connector 100 and the second connector 200 according to the present invention may be related to connection between the charging cart 100a for charging the electric vehicle and the electric vehicle or connection between the charging cart 100a for charging the charging cart 100a and transmitting power and the charger 200a.

Generally, a separate connector for electrical connection may be required to charge the electric vehicle through the charging cart 100a related to the moving charger. That is, the connector (e.g., the first connector) provided on the charging cart 100a may be connected to the charger (e.g., an energy storage device or a battery) of the electric vehicle to serve as an electrical/physical bridge for transmitting electrical energy. In the process of transmitting the electrical energy through the connector, when the connector is not connected properly, there is a concern about causing safety risk such as failure and fire. In this case, since the amount of power supplied per hour through the connector is quite great, a significant safety risk may occur. For example, when a slight positional error occurs between the charging cart 100a and the charger 200a of the electric vehicle, failure or fire may be caused by poor coupling, resulting in physical and human damage.

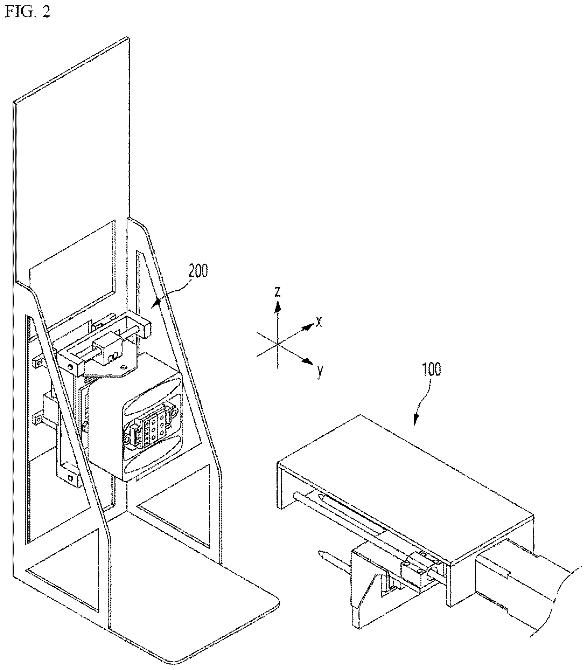

To prevent the occurrence of the above problems, the present invention may provide a docking connector assembly in which the electrical/physical coupling strength can be increased by correcting positional errors even when the positional errors between the two devices occur in the docking process of the connector for charging. Description of the specific structural features, configuration, and effects of the docking connector assembly according to the present invention will be described below with reference to FIGS. 2 to 8.

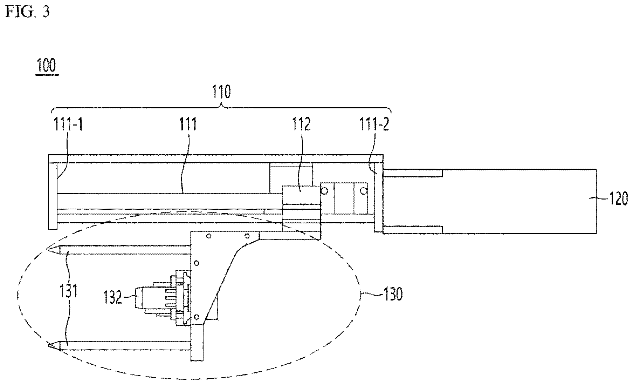

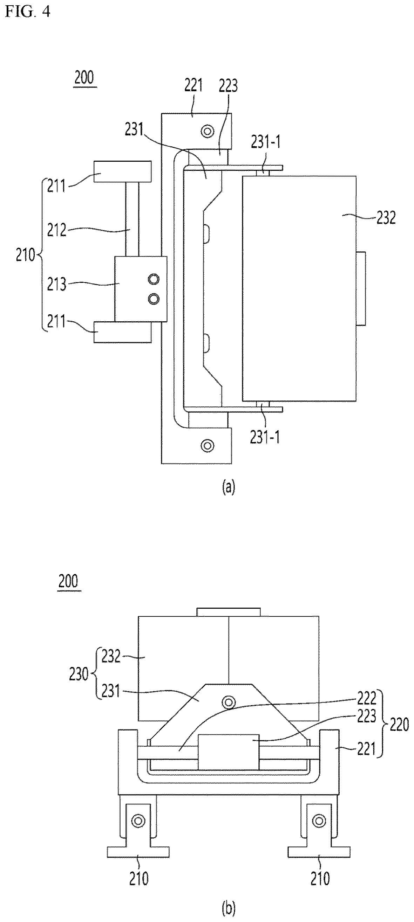

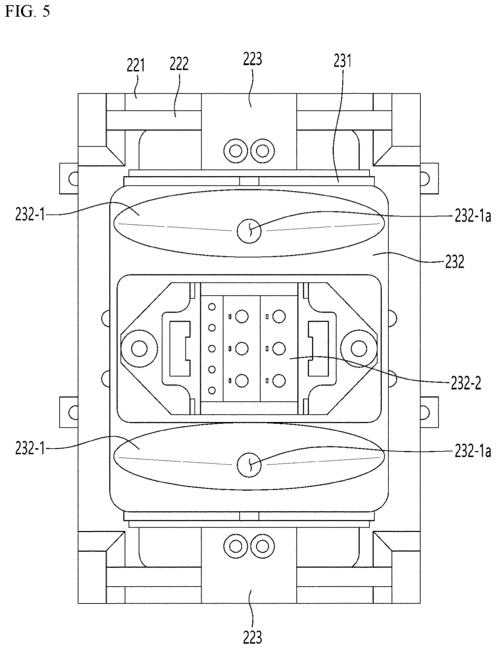

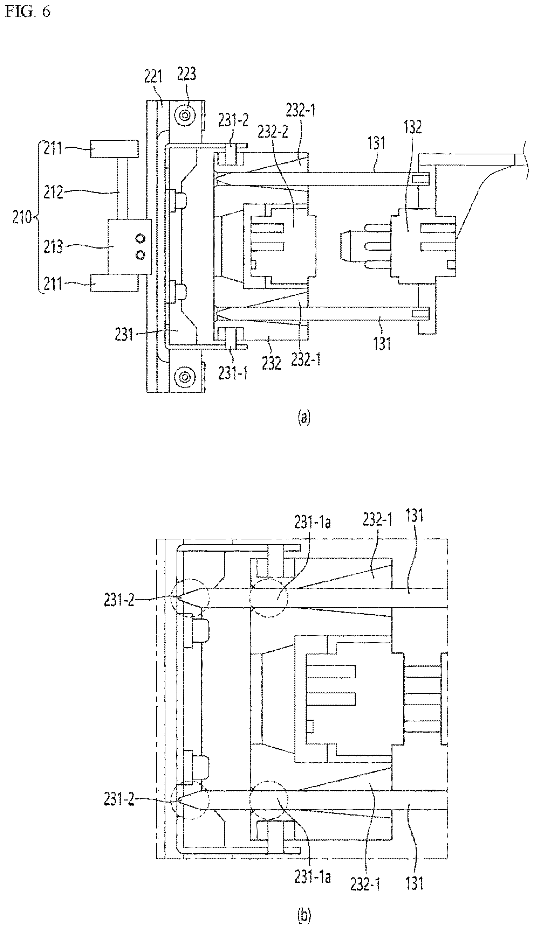

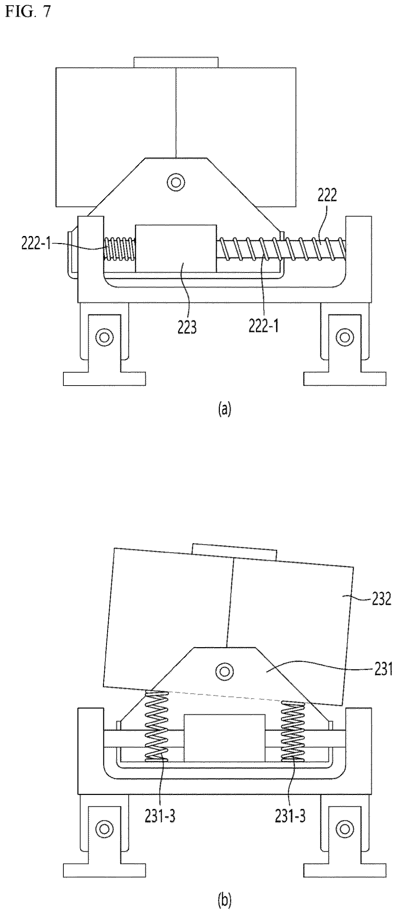

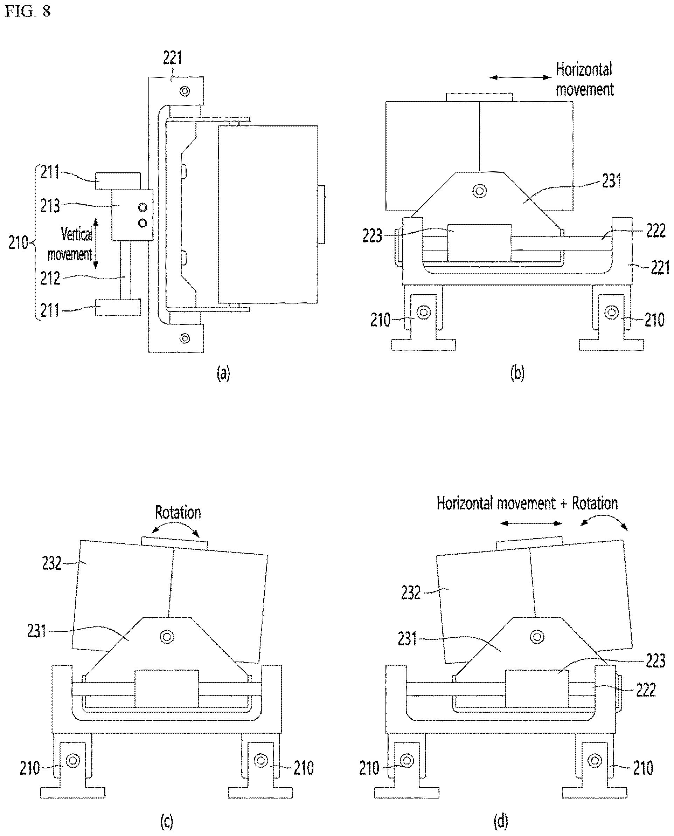

FIG. 2 is an exemplary view exemplarily showing a coupling process of a first connector and a second connector that are included in a docking connector assembly according to one embodiment of the present invention. FIG. 3 shows an exemplary view of the first connector according to one embodiment of the present invention from the side. FIG. 4 shows an exemplary view of the second connector according to one embodiment of the present invention in various directions. FIG. 5 shows an exemplary view of the second connector according to one embodiment of the present invention in one direction. FIG. 6 shows an exemplary view for describing a coupling process of the first connector and the second connector according to one embodiment of the present invention. FIG. 7 is an exemplary view exemplarily showing a first spring part and a second spring part that are provided on the second connector according to one embodiment of the present invention. FIG. 8 is an exemplary view exemplarily showing that a location of the second connector according to one embodiment of the present invention may be adjusted in various directions.

According to one embodiment of the present invention, a docking connector assembly 1000 includes the first connector 100 and the second connector 200 as shown in FIG. 2, and the first connector 100 and the second connector 200 corresponds to a coupling assembly that may be electrically and physically coupled. In one embodiment, the first connector 100 may be provided on a moving object, and the second connector 200 may be provided on both the moving object and the fixed object. However, the second connector 400 is mainly installed on the fixed object such as a stationary charger and a pillar in many cases.

For example, the first connector 100 may be provided on the charging cart 100a moved to charge the electric vehicle, and the second connector 200 may be provided on the electric vehicle connected to the charging cart 100a for charging the electric vehicle. For another example, the first connector 100 may be provided on the charging cart 100a moved for charging the electric vehicle, and the second connector 200 may be provided on the charger 200a provided in the charging station for charging the charging cart 100a. Detailed description of the device provided with each of the above-described first and second connectors is merely illustrative, and the present invention is not limited thereto. In an embodiment, the first connector 100 and the second connector 200 may be docked (or connected) for charging the electric vehicle, and as the first connector 100 and the second connector 200 are connected, the electrical energy stored in the charging cart 100a may be transmitted to the electric vehicle to charge the charger of the electric vehicle. That is, the electrical energy may be transmitted through connection between connectors.

According to one embodiment of the present invention, the first connector 100 may be provided to move, such as protruding outward from the charging cart 100a. According to the embodiment, a docking terminal (e.g., a first docking terminal) of the first connector 100 physically/electrically connected to another device to transmit electrical energy may need to be protected from an external impact or foreign substance. Therefore, when not used (e.g., when not connected to the second connector for charging), the first connector 100 may be located at a location protected through an external surface, and when used (e.g., when connected to the second connector for charging), the first connector 100 may protrude to be connected to the second connector 200.

Specifically, referring to FIG. 3, the first connector 100 may include a first moving part 110, a motor 120, and a docking part 130. The motor 120 may generate a driving force, and the first moving part 110 serves to control a location of the docking part 130 based on the driving force generated by the motor.

According to one embodiment, the motor 120 indicates equipment for converting electrical energy into mechanical energy using the force received by a conductor through which a current flows in a magnetic field and generates a driving force through the generated mechanical energy. Meanwhile, in addition to the motor, other types of power transmission devices, such as a hydraulic cylinder, may be used.

According to one embodiment, the first moving part 110 may receive power generated from the motor (or the power transmission device) and control the movement of the docking part 130 based on the corresponding power. More specifically, the first moving part 110 may include a first guide rail 111 provided in a longitudinal direction corresponding to a specific axis, and a first moving body 112 that may be moved on the first guide rail 111 by the power generated from the motor 120. As shown in FIG. 3, the first moving body 112 may be moved on the first guide rail 111 by the driving force of the motor 120. Here, a movement radius of the first moving body 112 on the first guide rail 111 may be limited through a first movement restriction surface 111-1 and a second movement restriction surface 111-2. That is, the first moving body 112 may be moved on the first guide rail 111 between the first movement restriction surface 111-1 and the second movement restriction surface 111-2 by the driving force of the motor.

According to one embodiment, the docking part 130 may include a docking terminal (e.g., a first docking terminal) directly connected to a docking terminal (e.g., a second docking terminal) of the charger 200a related to the moving object or the fixed object. When the docking terminal of the docking part 130 is exposed to the outside, there is risk of the occurrence of an electric impact accident, and thus the docking terminal of the docking part 130 needs to be safely protected when not used. That is, the docking part 130 according to the present invention may move in one axis direction depending on whether it is used or not. For example, the docking part 130 may move to a first location at which the docking part 130 protrudes or moved inward to a second location at which the docking part 130 is protected.

Specifically, the docking part 130 may be provided to be connected to the first moving body 112 as shown in FIG. 3. Therefore, the docking part 130 may move together in conjunction with the movement of the first moving body 112. Specifically, as the first moving body 112 is moved toward the first movement restriction surface 111-1 on the first guide rail 111 by the driving force of the motor 120, the docking part 130 may move to the first location at which the docking part 130 protrudes outward. That is, when the first docking terminal 132 of the first connector 100 is connected to the second connector 200, the first moving body 112 may be moved to the first movement restriction surface by the driving force of the motor 120, and as the docking part 130 connected to the first moving body 112 is moved together to protrude outward, the first docking terminal 132 of the first connector 100 may be connected to the second connector 200. In one example, when charging is completed through connection between the first connector 100 and the second connector 200, the first moving body 112 may be moved toward the second movement restriction surface 111-2 by the driving force of the motor 120, and thus the docking part 130 connected to the first moving body 112 may be moved together and moved inward to the second location at which the docking part 130 is protected from the first connector 100.

The docking part 130 including the first docking terminal 132 may be normally located at the second location at which the docking part 130 is protected by the exterior of the first connector 100, and when the docking part 130 is connected to the second connector 200, the docking part 130 may move according to the movement of the first moving body 112 based on the driving force of the motor to protrude outward from the first connector 100. That is, as the docking part 130 is provided through a mechanism that may move in one axis direction (e.g., a y-axis direction in FIG. 2), it is possible to prevent an unsafety problem that may occur when not used. That is, when not used (e.g., when not connected to the second connector for charging), the docking part 130 may be located at the second location at which the docking part 130 is protected by the exterior of the first connector 100, thereby protecting the first docking terminal from various types of accidents, such as an electric impact or damage to a device.

According to one embodiment, the docking part 130 may include a docking guide 131. The docking guide 131 may guide a coupling location so that the first docking terminal 132 is coupled to one point of the second connector 200. For example, since connection between connectors is based on the transmission of high-voltage electrical energy, the connection requires accurate connection and should be robust even in case of an external impact after accurate connection. The second connector 200 may include center holes 232-1a through which the docking guide 131 passes, and guide holes 232-1 for guiding the docking guide 131 to move toward the center holes 232-1a may be provided near the corresponding center holes 232-1a. The docking guide 131 may easily pass through the center hole 232-1a through the guide hole 232-1, thereby improving convenience. In addition, when the connectors are coupled, the docking guide 131 of the first connector 100 may pass through the center hole 232-1a of the second connector 200, thereby protecting the coupling between the connectors from an external impact. For a specific example, referring to FIG. 6, as the two docking guides 131 are fitted to pass through the two center holes 232-1a, respectively, the first docking terminal 132 provided between the docking guides may be coupled to a second docking terminal 232-2. In this case, the docking guide 131 may be provided by being fitted into the center hole 232-1a in each of the upper and lower directions of the coupled docking terminals. Therefore, it is possible to increase a coupling fixing strength, and reduce an impact directly applied to the coupled docking terminals by dispersing a generated impact when the external impact occurs, thereby improving safety. That is, the connectors can be easily coupled through the docking guide 131 provided on the docking part 130, and the coupling between the connectors can be more robust after coupling.

In an embodiment, a length of the first guide rail 111 may be provided to be greater than a length of the docking guide 131. A case where the docking part 130 is located therein at the second location at which the docking part 130 is protected may be to prevent the docking guide 131 from being exposed to the outside. That is, as the length of the first guide rail 111 is provided to be greater than the length of the docking guide 131, when the docking part 130 is located at the second location, the docking guide 131 may not depart from the outside (e.g., a virtual line extending from the first movement restriction surface) of the connector.

According to one embodiment, the second connector 200 may be provided in the form of a structure capable of multi-axis movement and rotation for smooth coupling with the first connector 100. Specifically, the second connector 200 may move in one or more axis direction and provided to rotate about an arbitrary axis. For example, based on FIG. 2, the second connector 200 may be provided to move in a z-axis direction and an x-axis direction and provided to be rotatable about a z-axis. More specific features related to the second connector 200 will be described below.

According to the embodiment, the second connector 200 may include a fixed part 210, a second moving part 220, and a rotational part 230. In one embodiment, the second connector 200 may include the fixed part 210 provided on one surface of the charger 200a. The fixed part 210 may include a mechanism for adjusting a height of the second docking terminal 232-2.

Specifically, the fixed part 210 may include two supports 211, a stationary rail 212, and a height moving body 213. The fixed part 210 may include the two supports 211 vertically provided with a predetermined interval formed therebetween. Here, the vertical direction may be related to the z-axis direction in FIG. 2. As shown in FIG. 4, the two supports 211 may be provided in a direction perpendicular to the ground. In addition, the fixed part 210 may include the stationary rail 212 for connecting the two supports. The stationary rail 212 may be provided to be perpendicular to the ground. In addition, the fixed part 210 may include the height moving body 213 that may vertically move on the stationary rail. That is, the height moving body 213 may move vertically on the stationary rail.

According to the embodiment, the second moving part 220 and the rotational part 230 may be provided to be connected to the fixed part 210. Specifically, the second moving part 220 and the rotational part 230 may be provided to be connected to the height moving body 213 of the fixed part 210. Therefore, the locations of the second moving part 220 and the rotational part 230 may be adjustable in the height direction according to the movement of the height moving body 213. For example, as the height moving body 213 moves downward on the stationary rail 212, installation heights of the second moving part 220 and the rotational part 230 may decrease, and as the height moving body 213 moves upward on the stationary rail 212, the installation heights of the second moving part 220 and the rotational part 230 may increase.

In this case, since the rotational part 230 is provided with the second docking terminal 232-2 to be connected between the connectors of the present invention, the installation height adjustment of the rotational part 230 may indicate the height adjustment of the second docking terminal 232-2. That is, as the height of the second docking terminal 232-2 may be adjusted by adjusting the height of the height moving body 213, location correction related to the height (e.g., the z-axis direction) may be possible in the coupling process between the connectors. For a specific example, when the installation location of the second connector 200 is higher or lower than the installation location of the first connector 100, the location of the docking terminal of each connector may be aligned by adjusting the height of the rotational part 230 through the movement of the height moving body 213. That is, as the location correction according to the height becomes possible, it is possible to improve the coupling stability.

In one embodiment, the second connector 200 may include the second moving part 220 provided to be connected to the fixed part 210 to move horizontally with respect to the fixed part 210. Here, the horizontal direction may indicate a direction parallel to the ground and may be related to a direction perpendicular to the installation direction of the two supports 211. For a more specific example, the horizontal direction related to the movement of the second moving part 220 may indicate the movement in the x-axis direction based on FIG. 2.

According to the embodiment, the second moving part 220 may include a first fixed body 221, a second guide rail 222, and a second moving body 223. Specifically, the second moving part 220 may include the first fixed body 221 connected to the fixed part 210. As shown in FIG. 4, the first fixed body 221 may be provided to be connected to the height moving body 213. According to the embodiment, as shown in FIG. 4B, two fixed parts 210 may be provided, and the height moving body 213 provided on each of the two fixed parts 210 may be provided to be connected to the first fixed body 221.

That is, when the second connector 200 is viewed from top, as shown in the example shown in FIG. 4B, a left side and right side of the first fixed body 221 may be provided to be connected to two height moving bodies 213 corresponding to the two fixed parts 210. Therefore, when the height moving body 213 is moved on the stationary rail 212, the height adjustment (that is, movement in the z-axis direction) of the first fixed body 221 is possible.

According to the embodiment, the second moving part 220 may include the second guide rail 222. Specifically, the second moving part 220 may include one or more second guide rails 222 provided to be connected to the first fixed body 221 to extend in a direction perpendicular to the stationary rail 212.

In this case, the second guide rail 222 may be provided to extend in the direction perpendicular to the stationary rail 212. For example, referring to FIG. 2, the stationary rail 212 may be provided parallel to the z-axis, and as the second guide rail 222 may be provided parallel to an x-axis, each of the stationary rail 212 and the second guide rail 222 may be provided in a direction perpendicular to each other.

According to the embodiment, the second moving part 220 may include a second moving body 223 provided to move on the second guide rail 222. The second guide rail 222 may be provided in a direction perpendicular to the installation direction of the stationary rail 212, that is, in a direction parallel to the ground. Therefore, the second moving body 223 provided to move on the second guide rail 222 may move in the direction parallel to the ground. For a specific example, the second moving body 223 may enable the movement related to the x-axis direction in the installation direction of the second guide rail 222 as shown in FIG. 2.

In one embodiment, a plurality of second guide rails 222 may be provided to correspond one-to-one to upper and lower sides of a second fixed body 231. For a specific example, as shown in FIG. 5, two second guide rails 222 may be provided to correspond one-to-one to upper and lower directions of the second fixed body 231.

In an embodiment, the second fixed body 231 may be provided to be connected to the second moving body 223. Therefore, the second fixed body 231 may move according to the movement of the second moving body 223. For a specific example, when the second moving body 223 moves to the left along the second guide rail 222 based on FIG. 5, the second fixed body 231 may move to the left, and when the second moving body 223 moves to the right along the second guide rail 222, the second fixed body 231 may move to the right. In this case, the second fixed body 231 may be provided with the rotational part 230 including the second docking terminal 232-2. That is, as the second fixed body 231 moves according to the movement of the second moving body 223, the docking location of the second docking terminal 232-2 may be adjusted. Here, the docking location adjustment of the second docking terminal 232-2 through the movement of the second moving body 223 may be performed in a direction perpendicular to the height-related docking location adjustment through the movement of the height moving body 213.

That is, the second connector 200 according to the present invention may provide the z-axis location adjustment through the movement of the height moving body 213 on the stationary rail 212 and the x-axis location adjustment through the movement of the second moving body 223 on the second guide rail 222, that is, the docking location adjustment corresponding to two axes. Therefore, by correcting errors through the location adjustment in the two-axis direction even when the coupling target (e.g., the first connector) is not properly aligned, it is possible to provide more stable and flexible electrical/physical coupling.

In an additional embodiment, the second moving part 220 may further include a first spring part 222-1 having an elastic force at a predetermined level or more and provided on the second guide rail 222. The first spring part 222-1 may be provided on both side surfaces of the second moving body 223 on the second guide rail 222. The first spring part 222-1 may be used to transmit a restoring force to the second moving body 223 to return the second moving body 223 to an original location. For example, in the process of coupling the connectors, the second moving body 223 may move in one axis direction on the second guide rail 222 for location correction, and after charging is completed (i.e., when the connectors are separated), the second moving body 223 may be returned to the original location (e.g., the exact center on the second guide rail) from the corrected location through the first spring part 222-1 provided on the second guide rail 222.

More specifically, referring to FIG. 7A, the first spring part 222-1 may be provided to surround an outer circumferential surface of the second guide rail 222. The first spring part 222-1 may be provided at both sides of the second moving body 223 on the second guide rail 222. Therefore, even when the second moving body 223 moves to each of the left and right sides on the second guide rail 222, the second moving body 223 may be returned to the original location through the first spring part 222-1 located at each of the left and right sides of the second moving body 223.

In one embodiment, the rotational part 230 may be provided to be connected to the second moving part 220 to rotate with respect to the second moving part 220. Specifically, the rotational part 230 may be provided to be connected to the second moving body 223 of the second moving part 220. That is, as described above, the rotational part 230 may move in the left and right directions according to the movement of the second moving body 223 on the second guide rail 222.

According to the embodiment, the rotational part 230 may include the second fixed body 231 connected to the second moving part 220. Specifically, the second fixed body 231 of the rotational part 230 may be provided to be connected to the second moving body 223 of the second moving part 220. The second fixed body 231 may include two fixed shafts 231-1 provided to correspond to each other in the vertical direction. Here, the vertical direction may indicate the z-axis direction based on FIG. 2. As shown in FIG. 4, the second fixed body 231 may include the fixed shaft 231-1 provided to correspond to each of the upper and lower directions and may be connected to the rotational body 232 through the corresponding fixed shaft 231-1. The rotational body 232 may be provided to be rotated with respect to the second fixed body 231 through two fixed axes 231-1.

Here, the fixed shafts 231-1 may be provided to face each other in relation to the z-axis direction. As the rotational body 232 is provided in contact with the fixed shaft 231-1 with respect to each of upper and lower surfaces thereof, the rotational body 232 may be provided to be rotated with respect to the second fixed body 231. The rotation of the rotational body 232 with respect to the second fixed body 231 may be a rotation related to the z-axis direction. The rotational body 232 connected through the fixed axis 231-1 related to the z-axis direction may be provided to rotate with respect to the z-axis direction of the second fixed body 231. Since the rotational body 232 may be provided with the second docking terminal 232-2 to be coupled to the first connector 100, when the rotational body 232 is rotatably provided, it may mean that the second docking terminal 232-2 is provided to rotate corresponding to the second fixed body 231 (or in relation to the z-axis direction).

That is, the second docking terminal 232-2 of the second connector 200 according to the present invention may enable the movement related to each of the two axes (e.g., x-axis and z-axis) directions to be smoothly coupled to the first connector 100 and may be provided to rotate using the z-axis as a reference axis. Therefore, the positional error may be flexibly corrected even when there is a position difference between the two connectors, thereby improving the stability of the electrical/physical coupling. Therefore, it is possible to secure the coupling stability between the two connectors, thereby minimizing risk of the occurrence of failure and fire.

In one embodiment, the rotational body 232 may include the guide hole 232-1, the center hole 232-1a, and the second docking terminal 232-2. The second docking terminal 232-2 may be provided adjacent to the guide hole 232-1 and connected to the first connector. The transmission of the electrical energy according to the present invention may be possible by connecting the first docking terminal 132 with the second docking terminal 232-2.

Specifically, the rotational body 232 may include one or more center holes 232-1a through which the docking guide 131 of the first connector 100 may pass, the guide hole 232-1 formed on a peripheral portion of the center hole 232-1a and for guiding the docking guide 131 to the center hole 232-1a even when the location of the docking guide 131 departs from the original location, and the second docking terminal 232-2 physically and electrically coupled to the first connector 100. Therefore, even when the charging cart 100a provided with the first connector 100 and the moving object/fixed object provided with the second connector 200 are docked in a state of not being completely aligned in position, the two docking terminals may be easily coupled through the structural feature of the rotational body 232.

Specifically, the rotational body 232 may include the guide hole 232-1 provided in a funnel shape on one surface in contact with the first connector 100. As shown in FIGS. 5 and 6, the rotational body 232 may include the guide hole 232-1 provided in the funnel shape in which a diameter is reduced toward the center hole 232-1a or the installation location of the second fixed body 231. The guide hole 232-1 may be formed in a nearby area corresponding to an outer circumferential surface of the center hole 232-1a. In an embodiment, the center hole 232-1a may be provided to have an inner diameter corresponding to an outer diameter of the docking guide 131. According to one embodiment, a diameter of the guide hole 232-1 may be provided to be greater than a diameter of the center hole 232-1a. The narrowest diameter of the guide hole 232-1 may be provided to be greater than the diameter of the center hole 232-1a. Since the guide hole 232-1 is provided to have a greater diameter than the center hole 232-1a and has a shape that gradually reduces toward the center hole 232-1a, when the docking guide 131 of the first connector 100 approaches the peripheral portion of the center hole 232-1a, the docking guide 131 may be guided to reach the center hole 232-la due to the structural feature of the guide hole 232-1. In an embodiment, as shown in FIG. 6, an end portion of the docking guide 131 may have a tapered shape, and the guide hole 232-1 of the rotational part 230 may have a tolerance optimized to match the tapered shape of the docking guide 131.

When the docking guide 131 of the first connector 100 fully passes through the center hole 232-1a of the second connector 200, the first docking terminal 132 of the first connector 100 may be coupled to the second docking terminal 232-2 of the second connector 200. Therefore, the docking terminals may be easily coupled due to the structural feature of the docking guide 131 and the guide hole 232-1. That is, it is possible to provide improved convenience in the process of adjusting the locations of the connectors and coupling the connectors to connect the first connector 100 with the second connector 200.

In one embodiment, the guide hole 232-1 may be provided as two or more guide holes 232-1. In this case, the second docking terminal 232-2 may be provided in a central portion between the two or more guide holes 232-1. Specifically, as shown in FIG. 5, the second docking terminal 232-2 may be located on a central portion of the rotational body 232, and one of two guide holes 232-1 and one of two center holes 232-1a may be provided to correspond to each of the upper and lower directions with respect to the second docking terminal 232-2. In addition, the first connector 100 may be provided with two docking guides 131 each corresponding to the guide hole 232-1 and the center hole 232-1a. For a specific example, referring to FIG. 6, as the two docking guides 131 are fitted to pass through the two center holes 232-1a, respectively, the first docking terminal 132 provided between the docking guides may be coupled to the second docking terminal 232-2. In this case, the docking guide 131 may be provided by being fitted into the center hole 232-1a on each of the upper and lower directions of the coupled docking terminals. Therefore, it is possible to increase a coupling fixing strength, and reduce an impact directly applied to the coupled docking terminals by dispersing a generated impact when the external impact occurs, thereby improving safety. That is, the connectors can be easily coupled through the docking guide 131 provided on the docking part 130, and the coupling between the connectors can be more reinforced after coupling.

In one embodiment, the second fixed body 231 may include a docking guide seating part 231-2 on which the docking guide 131 of the first connector is seated. The docking guide 131 passing through the central hole 232-1a of the rotational part 230 may be seated on the docking guide seating part 231-2. Specifically, as shown in FIG. 6A, as the docking guide 131 of the first connector 100 may be fitted by passing through the guide hole 232-1 and the center hole 232-1a of the rotational part 230, the first docking terminal 132 of the first connector 100 may be coupled to the second docking terminal 232-2 of the second connector 200. When the first docking terminal 132 is connected to the second docking terminal 232-2 as the docking guide 131 fully passes through the center hole 232-1a, a portion of the docking guide 131 passing through the center hole 232-1a may be seated in the docking guide seating part 231-2 as shown in FIG. 6B. When the docking terminals are coupled, the docking guide 131 may be located in contact with the center hole 232-1a and the docking guide seating part 231-2, thereby protecting the coupling of the docking terminals from an external impact. That is, even when an impact occurs in a connection portion, the docking guide 131 may be provided to be in contact with the center hole 232-1a and the docking guide seating part 231-2 and supported through each component, thereby preventing an impact from being applied to the connection portion (i.e., the coupling portion of the docking terminals).

According to one embodiment, the rotational part 230 may include a second spring part 231-3 provided between the second fixed body 231 and the rotational body 232. The second spring part 231-3 may return the corresponding rotational body 232 to the original location by applying a restoring force or an elastic force to the second fixed body. Specifically, the second spring part 231-3 may be provided between the second fixed body 231 and the rotational body 232 to apply an elastic restoring force to the rotational body 232. The second spring part 231-3 may be provided to apply the elastic restoring force to the corresponding rotational body 232 in relation to the rotation range of the rotational body 232.

For a specific example, as shown in FIG. 7B, the second spring part 231-3 may be provided between the rotational body 232 and the second fixed body 231 in relation to each the right and left sides related to the rotation radius of the rotational body 232. For example, the rotational body 232 may be rotated in the right or left direction with respect to the second fixed body 231 to be coupled between the connectors (or the docking terminals). When the connector is separated after charging is completed, the rotational body 232 may be returned to a state before rotation based on the elastic restoring force applied from the second spring part 231-3. That is, even when the rotational part 230 is rotated with respect to the second fixed body 231 to be coupled between the connectors, the rotational part 230 may be returned to the original location through the second spring part 231-3. That is, even when the rotational part 230 is rotated at a predetermined angle, the rotational part 230 may be returned to the original location by a restoring force.

Hereinafter, the second connector whose location may be adjusted through rotation about two or more axial directions and one axis direction will be described with reference to FIG. 8. FIG. 8 is an exemplary view exemplarily showing that a location of the second connector according to one embodiment of the present invention may be adjusted in various directions. FIG. 8A is an exemplary view of the second connector 200 from the side, and FIGS. 8B, 8C, and 8D are exemplary views of the second connector 200 from top.

Referring to FIG. 8A, the fixed part 210 may include two supports 211 vertically provided with a predetermined interval formed therebetween. Here, the vertical direction may be related to the z-axis direction in FIG. 2. The two supports 211 may be provided in a direction perpendicular to the ground. In addition, the fixed part 210 may include the stationary rail 212 for connecting the two supports. The stationary rail 212 may be provided to be perpendicular to the ground. In addition, the fixed part 210 may include the height moving body 213 that may vertically move on the stationary rail. That is, the height moving body 213 may move vertically on the stationary rail. According to the embodiment, the second moving part 220 and the rotational part 230 may be provided to be connected to the fixed part 210. Specifically, the second moving part 220 and the rotational part 230 may be provided to be connected to the height moving body 213 of the fixed part 210. Therefore, the second moving part 220 and the rotational part 230 may have adjustable locations in the height direction according to the movement of the height moving body 213. For example, as the height moving body 213 moves downward on the stationary rail 212, installation heights of the second moving part 220 and the rotational part 230 may decrease, and as the height moving body 213 moves upward on the stationary rail 212, the installation heights of the second moving part 220 and the rotational part 230 may increase. In this case, since the rotational part 230 is provided with the second docking terminal 232-2 to be connected between the connectors of the present invention, the installation height adjustment of the rotational part 230 may indicate the height adjustment of the second docking terminal 232-2. That is, as the height of the second docking terminal 232-2 may be adjusted by adjusting the height of the height moving body 213, location correction related to the height (e.g., the z-axis direction) may be possible in the coupling process between the connectors. For a specific example, when the installation location of the second connector 200 is higher or lower than the installation location of the first connector 100, the location of the docking terminal of each connector may be aligned by adjusting the height of the rotational part 230 through the movement of the height moving body 213. That is, as the vertical location correction according to the height may be possible, it is possible to improve the coupling stability.

Referring to FIG. 8B, the second moving part 220 may include the second moving body 223 provided to move on the second guide rail 222. The second guide rail 222 may be provided in a direction perpendicular to the installation direction of the stationary rail 212, that is, in a direction parallel to the ground. Therefore, the second moving body 223 provided to move on the second guide rail 222 may move in the direction parallel to the ground. For a specific example, the second moving body 223 may enable the movement related to the x-axis direction in the installation direction of the second guide rail 222 as shown in FIG. 2.

That is, the second connector 200 according to the present invention may provide the z-axis location adjustment through the movement of the height moving body 213 on the stationary rail 212 and the x-axis location adjustment through the movement of the second moving body 223 on the second guide rail 222, that is, the docking location adjustment corresponding to two axes. Therefore, by correcting errors through the location adjustment in the two-axis direction even when the coupling target (e.g., the first connector) is not properly aligned, it is possible to provide more stable and flexible electrical/physical coupling.

Referring to FIG. 8C, the rotational part 230 may include the second fixed body 231 connected to the second moving part 220. Specifically, the second fixed body 231 of the rotational part 230 may be provided to be connected to the second moving body 223. The second fixed body 231 may include two fixed shafts 231-1 provided to correspond to each other in the vertical direction. Here, the vertical direction may indicate the z-axis direction based on FIG. 2. As shown in FIG. 4, the second fixed body 231 may include the fixed shaft 231-1 provided to correspond to each of the upper and lower directions and may be connected to the rotational body 232 through the corresponding fixed shaft 231-1. The rotational body 232 may be provided to be rotated with respect to the second fixed body 231 through two fixed axes 231-1.

Here, the fixed shafts 231-1 may be provided to face each other in relation to the z-axis direction. As the rotational body 232 is provided in contact with the fixed shaft 231-1 with respect to each of upper and lower surfaces thereof, the rotational body 232 may be provided to be rotated with respect to the second fixed body 231. The rotation of the rotational body 232 with respect to the second fixed body 231 may be a rotation related to the z-axis direction. The rotational body 232 connected through the fixed axis 231-1 related to the z-axis direction may be provided to rotate with respect to the z-axis direction of the second fixed body 231. Since the rotational body 232 may be provided with the second docking terminal 232-2 to be coupled to the first connector 100, when the rotational body 232 is rotatably provided, it may mean that the second docking terminal 232-2 is provided to rotate corresponding to the second fixed body 231 (or in relation to the z-axis direction). That is, as shown in FIG. 8C, since the rotational body 232 may be rotated in a specific rotation range, the alignment for coupling between the docking terminals can be made easier. That is, location correction through the rotation of the rotational body 232 may be possible to be coupled to the first docking terminal 132.

Referring to FIG. 8D, the x-axis location adjustment through the movement of the second moving body 223 on the second guide rail 222 and the location adjustment through the rotation of the rotational body 232 about the z-axis may be provided simultaneously. That is, the location adjustment in the x-axis direction and the rotation adjustment with respect to the z-axis of the second docking terminal 232-2 based on FIG. 2 may be simultaneously performed.

That is, the second docking terminal 232-2 of the second connector 200 according to the present invention may enable the movement related to each of the two axes (e.g., x-axis and z-axis) directions to be smoothly coupled to the first connector 100 and may be provided to rotate using the z-axis as a reference axis. Therefore, the positional error may be flexibly corrected even when there is a position difference between the two connectors, thereby improving the stability of the electrical/physical coupling. Therefore, it is possible to secure the coupling stability between the two connectors, thereby minimizing risk of the occurrence of failure and fire.

Although embodiments of the present invention have been described above with reference to the accompanying drawings, those skilled in the art to which the present invention pertains will be able to understand that the present invention can be carried out in other specific forms without changing the technical spirit or essential features thereof. Therefore, it should be understood that the above-described embodiments are illustrative and not restrictive in all respects.

The description of the suggested embodiments is provided so that those skilled in the art may use or practice the present invention. Various modifications to these embodiments will be apparent to those skilled in the art, and the general principles defined herein may be applied to other embodiments without departing from the scope of the present invention. Therefore, the present invention is not limited to the embodiments suggested herein, but should be construed in the widest scope consistent with the principles and novel features suggested herein.

### DESCRIPTION OF REFERENCE NUMERALS

| | | | |
|---|---|---|---|
| 1000: | docking connector assembly | | |
| 100: | first connector | 100a: | charging cart |
| 110: | first moving part | 111: | first guide rail |
| 111-1: | first movement restriction surface | | |
| 111-2: | second movement restriction surface | | |
| 112: | first moving body | 120: | motor |
| 130: | docking part | 131: | docking guide |
| 132: | first docking terminal | 200: | second connector |
| 200a: | charger | 210: | fixed part |
| 211: | support | 212: | stationary rail |
| 213: | height moving body | 220: | second moving part |
| 221: | first fixed body | 222: | second guide rail |

| | | | |
|---|---|---|---|
| 222-1: | first spring part | 223: | second moving body |
| 230: | rotational part | 231: | second fixed body |
| 231-1: | fixed shaft part | 231-2: | docking guide seating |
| 231-3: | second spring part | 232: | rotational body |
| 232-1: | guide hole | 232-1a: | center hole |
| 232-2: | second docking terminal | | |

## Claims

1. A docking connector assembly for an electric vehicle charger, comprising:
a first connector provided in a first charger; and
a second connector provided to be coupled to the first connector,
wherein the second connector is provided to move in one or more axial directions and rotate about an arbitrary axis.

2. The docking connector assembly of claim 1, wherein the first connector includes:
a power transmission device;
a first moving part using power of the power transmission device; and
a docking part provided to be connected to the first moving part and coupled to the second connector.

3. The docking connector assembly of claim 2, wherein the first moving part includes:
a first guide rail provided to extend in one direction; and
a first moving body provided to be movable on the first guide rail by the power transmission device.

4. The docking connector assembly of claim 3, wherein the docking part includes:
a first docking terminal coupled to the second connector; and
a docking guide configured to guide a coupling location so that the first docking terminal is coupled to one point of the second connector.

5. The docking connector assembly of claim 1, wherein the second connector includes:
a fixed part provided on one surface of a second charger or a fixed surface;
a second moving part connected to the fixed part to be movable in a first direction; and
a rotational part rotatably connected to the second moving part.

6. The docking connector assembly of claim 5, wherein the fixed part includes:
a plurality of supports provided with a predetermined interval formed therebetween;
a stationary rail connecting the plurality of supports; and
a height moving body that is movable in a longitudinal direction of the stationary rail.

7. The docking connector assembly of claim 6, wherein the second moving part includes:
a first fixed body connected to the fixed part;
one or more second guide rails connected to the first fixed body and provided to extend in a direction perpendicular to the stationary rail; and
a second moving body provided to move in a longitudinal direction of the second guide rail.

8. The docking connector assembly of claim 7, wherein the second moving part further includes first spring parts provided on the second guide rail, and
the first spring parts are provided on both side surfaces of the second moving body on the second guide rail.

9. The docking connector assembly of claim 5, wherein the rotational part includes:
a second fixed body connected to the second moving part;
a rotational body provided to rotate with respect to the second fixed body; and
a second spring part provided between the second fixed body and the rotational body.

10. The docking connector assembly of claim 9, wherein the second fixed body includes a docking guide seating part on which a docking guide is seated.

11. The docking connector assembly of claim 9, wherein the rotational body includes:
a guide hole provided to allow a docking guide to pass therethrough; and
a second docking terminal provided to be connected to the first connector, and
the guide hole includes a center hole having a constant diameter and a reverse-tapered hole whose diameter gradually increases.

12. The docking connector assembly of claim 11, wherein the guide hole is provided as two or more guide holes, and
the second docking terminal is provided on a central portion between the two or more guide holes.
